# EUROPEAN PATENT APPLICATION

(11) **EP 4 851 994 A1**
(43) Date of publication of application: **09.12.2026**
(21) Application number: 26172013.0
(22) Date of filing: 13.04.2026
(51) Int. Cl.: G10L 25/51, G01S 3/84, G10L 25/03

(54) **SYSTEM AND METHOD FOR SOUND DIRECTION RECOGNITION**

(30) Priority: 05.06.2025 TW 114121065
(71) Applicant: Giga-Byte Technology Co., Ltd., New Taipei City (TW)
(72) Inventor: WU, Shu-Cheng, New Taipei City (TW); CHANG, Kuei-Shan, New Taipei City (TW)
(74) Representative: AWA Sweden AB

(57) **Abstract**

A system and a method for sound direction recognition are provided. The method for sound direction recognition includes: obtaining a left channel audio signal and a right channel audio signal from an input audio signal; determining audio signal energy of each of the left channel audio signal and the right channel audio signal and a first absolute value of an interaural time difference between the left channel audio signal and the right channel audio signal; setting a sound source direction according to a relationship between audio signal energy of each of the left channel audio signal and the right channel audio signal and a first threshold and a relationship between the first absolute value and a second threshold; and controlling a display device (11,21) to display the sound source direction.

## Description

### BACKGROUND

### 1. Technical Field

This disclosure relates to a system and a method for sound direction recognition, and more particularly to a system and a method for sound direction recognition that display a sound source direction.

### 2. Related Art

Nowadays, people frequently engage in various activities requiring audio through computers, such as remote teleconferencing, online learning, multi-player online games, or instant messaging. In these application scenarios, audio plays a crucial role, not only for transmitting voice information but also for influencing the user's interactive experience and communication efficiency. With the increasing popularity of remote work and digital entertainment, the reliance on computer audio processing capabilities continues to rise.

However, when users participate in activities such as online meetings or games, it is difficult to distinguish the source location of sounds in real-time, which in turn affects the overall user experience and sense of immersion. Furthermore, even if a computer can assist in determining a sound source direction, the determination is often affected by the volume levels, which can easily lead to inaccurate setting or recognition of the sound source direction.

### SUMMARY

In view of the above, the disclosure provides a system and a method for sound direction recognition to solve the aforementioned problems.

According to an embodiment of the disclosure, a method for sound direction recognition is executed by a processing device, and includes: obtaining a left channel audio signal and a right channel audio signal from an input audio signal; determining audio signal energy of each of the left channel audio signal and the right channel audio signal and a first absolute value of an interaural time difference between the left channel audio signal and the right channel audio signal; setting a sound source direction according to a relationship between audio signal energy of each of the left channel audio signal and the right channel audio signal and a first threshold and a relationship between the first absolute value and a second threshold; and controlling a display device to display the sound source direction. The sound source direction corresponding to a left source indicates that the audio signal energy of the left channel audio signal is greater than the first threshold and the first absolute value is smaller than the second threshold, and the sound source direction corresponding to a right source indicates that the audio signal energy of the right channel audio signal is greater than the first threshold and the first absolute value is smaller than the second threshold.

According to an embodiment of the disclosure, a system for sound direction recognition includes: a display device and a processing device. The display device is configured to display a sound source direction. The processing device is connected to the display device, and the processing device is configured to obtain a left channel audio signal and a right channel audio signal from an input audio signal, determine audio signal energy of each of the left channel audio signal and the right channel audio signal and a first absolute value of an interaural time difference between the left channel audio signal and the right channel audio signal, set a sound source direction according to a relationship between audio signal energy of each of the left channel audio signal and the right channel audio signal and a first threshold and a relationship between the first absolute value and a second threshold, and control a display device to display the sound source direction, wherein the sound source direction corresponding to a left source indicates that the audio signal energy of the left channel audio signal is greater than the first threshold and the first absolute value is smaller than the second threshold, and the sound source direction corresponding to a right source indicates that the audio signal energy of the right channel audio signal is greater than the first threshold and the first absolute value is smaller than the second threshold.

The system and method for sound direction recognition according to one or more embodiments of the disclosure may effectively improve the accuracy of determining the sound source direction through setting the sound source direction based on the comparison result between the audio signal energy and the first threshold.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
Fig. 1 is a is a block diagram of a system for sound direction recognition according to an embodiment of the disclosure;
Fig. 2 is a is a flowchart of a method for sound direction recognition according to an embodiment of the disclosure;
Fig. 3 is a schematic diagram of a display device displaying a sound source direction according to an embodiment of the disclosure; and
Fig. 4 is a block diagram of a system for sound direction recognition according to another embodiment of the disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

The system and method for sound direction recognition according to one or more embodiments of the disclosure can be applied to scenarios for playing audio for a user at a display device end, such as online meetings and gaming.

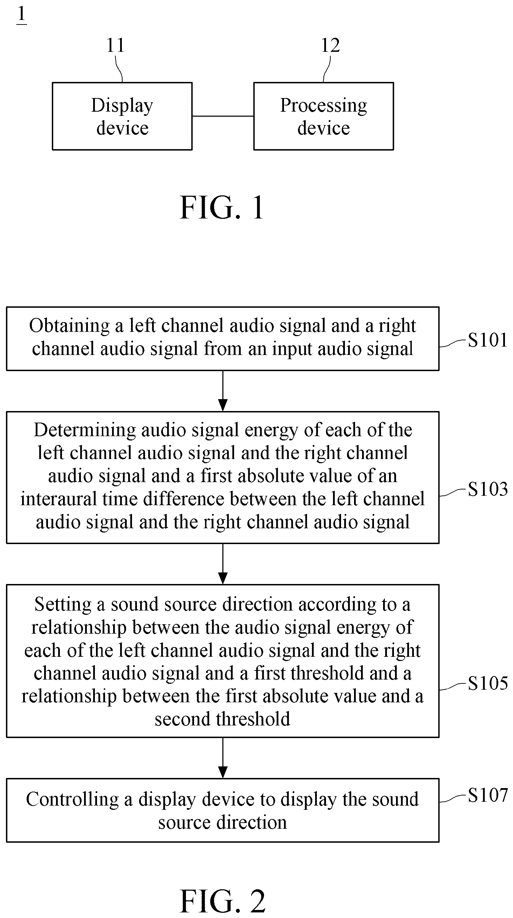

Please refer to Fig. 1 which is a block diagram of a system for sound direction recognition according to an embodiment of the disclosure. As shown in FIG. 1, the system for sound direction recognition 1 includes a display device 11 and a processing device 12.

The display device 11 may include a liquid crystal display (LCD) device, an organic light-emitting diode (OLED) display device, a quantum dot light-emitting diode (QLED) display device, or the like. The display device 11 is used to be controlled to display a sound source direction. The sound source direction may indicate the direction from which the sound originates. Furthermore, in application scenarios of online meetings or online games where a user competes with other players, the sound source direction may indicate a relative position between a person speaking at a remote end and a remote audio input device (e.g., a microphone) used by the person. In gaming application scenarios, the sound source direction may also indicate the direction from which in-game sound effects such as gunshots or footsteps originate. The display device 11 may overlay the sound source direction onto an original display image and display the overlay image, where the original display image is, for example, a video image of an online meeting, a gaming screen, or the like.

The processing device 12 is connected to the display device 11. The processing device 12 may be electrically or communicatively connected to the display device 11. The processing device 12 may obtain voice provided by a remote audio input device via a network as the input audio signal, or may obtain built-in sound effects of a game as the input audio signal. The processing device 12 may be further connected to an audio playback component at the display device 11 end to play the input audio signal, wherein the audio playback component may include a speaker, a headphone, or the like. The processing device 12 is configured to set the sound source direction based on the input audio signal and control the display device 11 to display the sound source direction, the specific execution content will be described later. The processing device 12 may include one or more processors, and the processor is, for example, a central processing unit (CPU), a graphics processing unit (GPU), a microcontroller, a programmable logic controller (PLC), or other processors with signal processing functions.

Please refer to Fig. 1 and Fig. 2 together, where Fig. 2 is a flowchart of a method for sound direction recognition according to an embodiment of the disclosure. The method for sound direction recognition can be executed by the system for sound direction recognition 1 of Fig. 1. As shown in Fig. 2, the method for sound direction recognition includes: step S101: obtaining a left channel audio signal and a right channel audio signal from an input audio signal; step S103: determining audio signal energy of each of the left channel audio signal and the right channel audio signal and a first absolute value of an interaural time difference between the left channel audio signal and the right channel audio signal; step S105: setting a sound source direction according to a relationship between the audio signal energy of each of the left channel audio signal and the right channel audio signal and a first threshold and a relationship between the first absolute value and a second threshold; and step S107: controlling a display device to display the sound source direction.

In step S101, the processing device 12 may obtain the input audio signal in the manner described above, wherein the input audio signal may be a stereo mix. The processing device 12 may execute separation of a left channel and a right channel on the input audio signal to obtain the left channel audio signal and the right channel audio signal.

In step S103, the processing device 12 determines the audio signal energy of the left channel audio signal and the audio signal energy of the right channel audio signal, determines an interaural time difference (ITD) between the left channel audio signal and the right channel audio signal, and determines a first absolute value of the interaural time difference. The audio signal energy may be a voltage root mean square (VRMS).

In step S105, the processing device 12 sets the sound source direction according to a relationship between the audio signal energy of each of the left channel audio signal and the right channel audio signal and a first threshold, and a relationship between the first absolute value and a second threshold. The first threshold may be 0, and the second threshold may be 10 milliseconds (ms). The configuration of the first absolute value and the second threshold may be used to adjust the determination precision of the sound source direction.

Further, the sound source direction corresponding to a left source indicates that the audio signal energy of the left channel audio signal is greater than the first threshold and the first absolute value is less than the second threshold, the sound source direction corresponding to a right source indicates that the audio signal energy of the right channel audio signal is greater than the first threshold and the first absolute value is less than the second threshold.

In step S107, the processing device 12 controls the display device 11 to display the set sound source direction, and controls the audio playback component to play the input audio signal, so that a user at the display device 11 end may more accurately identify the direction of the sound according to the input audio signal in coordination with the sound source direction displayed by the display device 11.

Since the lower the volume, the lower the accuracy of the determination of the sound source direction may be, the system and method for sound direction recognition according to one or more embodiments of the disclosure set the sound source direction through the comparison result between the audio signal energy and the first threshold, so that the accuracy of determining the sound source direction may be effectively improved.

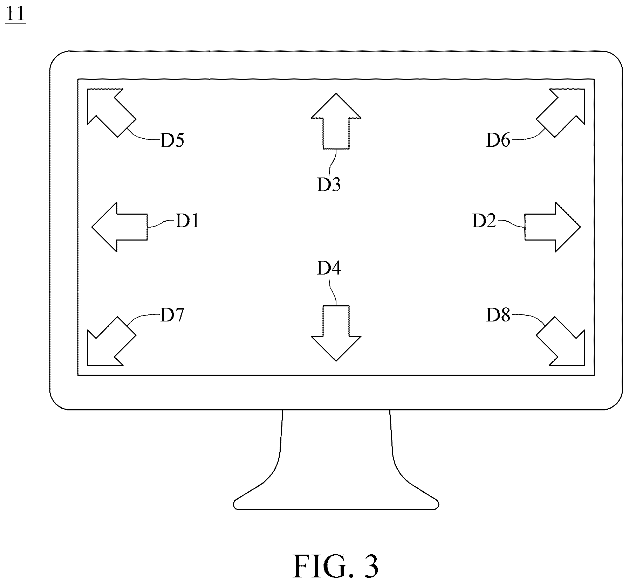

Please further refer to Fig. 3, which is a schematic diagram of a display device displaying a sound source direction according to an embodiment of the disclosure. As shown in Fig. 3, the display device 11 may display a sound source direction D1 corresponding to a left source, or display a sound source direction D2 corresponding to a right source.

In an embodiment, the processing device 12 may further determine an interaural level difference (ILD) between the left channel audio signal and the right channel audio signal. The sound source direction corresponding to the left source may further indicate that the interaural level difference is greater than a third threshold, and the sound source direction corresponding to the right source may further indicate that the interaural level difference is less than a negative value of the third threshold. The third threshold may be 0.1 decibels (dB). The configuration of the third threshold may be used to adjust the determination precision of the sound source direction.

In addition, the sound source direction may further include a sound source direction D3 corresponding to a front source, a sound source direction D4 corresponding to a rear source, a sound source direction D5 corresponding to a front-left source, a sound source direction D6 corresponding to a front-right source, a sound source direction D7 corresponding to a rear-left source, and a sound source direction D8 corresponding to a rear-right source.

The sound source direction D3 corresponding to a front source indicates that the first absolute value is less than the second threshold, and a second absolute value of the interaural level difference is less than the third threshold; the sound source direction D4 corresponding to a rear source indicates that the interaural time difference is greater than the second threshold, and the second absolute value of the interaural level difference is less than the third threshold; the sound source direction D5 corresponding to a front-left source indicates that the interaural time difference is greater than the second threshold, and the interaural level difference is greater than the third threshold; the sound source direction D6 corresponding to a front-right source indicates that the interaural time difference is less than a negative value of the second threshold, and the interaural level difference is greater than the third threshold; the sound source direction D7 corresponding to a rear-left source indicates that the interaural time difference is greater than the second threshold, and the interaural level difference is less than a negative value of the third threshold; and the sound source direction D8 corresponding to a rear-right source indicates that the interaural time difference is less than a negative value of the second threshold, and the interaural level difference is less than a negative value of the third threshold.

Furthermore, the determination method of the sound source direction described above may be as shown in Table 1 below, wherein the sound source direction of the left source and the sound source direction of the right source are determined based on the audio signal energy and the interaural time difference. In Table 1, LE represents the audio signal energy of the left channel audio signal; RE represents the audio signal energy of the right channel audio signal; threshold_E represents the first threshold; ITD represents the interaural time difference; abs(ITD) represents the absolute value of the interaural time difference, i.e., the first absolute value; threshold_ITD represents the second threshold; ILD represents the interaural level difference; abs(ILD) represents the absolute value of the interaural level difference, i.e., the second absolute value; and threshold_ILD represents the third threshold.

**Table 1**

| Logic Expression | sound source direction |
|---|---|
| LE > threshold E; abs(ITD) < threshold ITD | left source |
| RE > threshold E; abs(ITD) < threshold ITD | right source |
| abs(ITD) < threshold ITD; abs(ILD) < threshold ILD | front source |
| abs(ILD) < threshold ILD; ITD > threshold ITD | rear source |
| ITD > threshold ITD; ILD > threshold ILD | front-left source |
| ITD < -threshold ITD; ILD > threshold ILD | front-right source |
| ITD > threshold ITD; ILD < -threshold ILD | rear-left source |
| ITD < -threshold ITD; ILD < -threshold ILD | rear-right source |

Additionally, as described above, the sound source direction of the left source and the sound source direction of the right source may be further determined based on the interaural level difference, and the corresponding determination expressions are as shown in Table 2 below.

**Table 2**

| Logic Expression | sound source direction |
|---|---|
| LE > threshold E; ILD > threshold ILD; abs(ITD) < threshold ITD | left source |
| RE > threshold E; ILD < -(threshold ILD); abs(ITD) < threshold ITD | right source |

Additionally, when an interaural time difference of an input audio signal is equal to the second threshold, the processing device 12 may ignore the input audio signal and execute the method for sound direction recognition on a subsequent input audio signal. Similarly, when an interaural level difference of an input audio signal is equal to the third threshold, the processing device 12 may ignore the input audio signal and execute the method for sound direction recognition on a subsequent input audio signal.

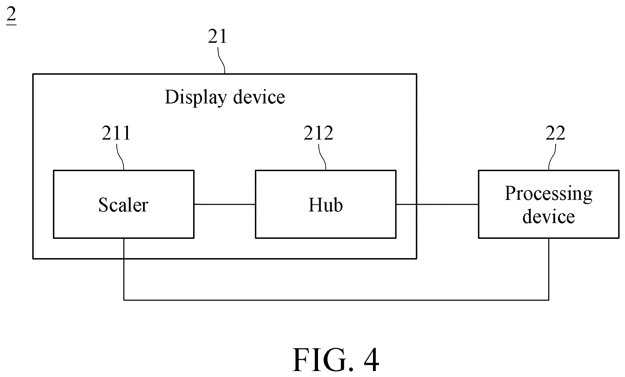

Please refer to Fig. 4, which is a block diagram of a system for sound direction recognition according to another embodiment of the disclosure. As shown in Fig. 4, the system for sound direction recognition 2 includes a display device 21 and a processing device 22. The display device 21 may include a liquid crystal display (LCD) device, an organic light-emitting diode (OLED) display device, a quantum dot light-emitting diode (QLED) display device, or the like. The processing device 22 is connected to the display device 21, and the implementation and operation of the processing device 22 may be the same as those of the processing device 12 described with reference to FIG. 1, and thus will not be repeated herein.

The display device 21 may include a scaler 211 and a hub 212. The scaler 211 is connected to the hub 212. Furthermore, the scaler 211 may be connected to the hub 212 through an inter-integrated circuit (I2C) interface.

Furthermore, each of the scaler 211 and the hub 212 may be connected to the processing device 22. Further, the scaler 211 may be connected to the processing device 22 through one or more of a high definition multimedia interface (HDMI), a display port (DP), and a type C universal serial bus (USB). The hub 212 may be connected to the processing device 22 through a USB 3.0 universal serial bus.

Step S107 of FIG. 2 may include: the processing device 22 outputs the sound source direction to the hub 212 of the display device 21 through a universal serial bus, the hub 212 may output the sound source direction to the scaler 211; and the scaler 211 may accordingly display the sound source direction through an on-screen display (OSD).

In view of the above description, the system and method for sound direction recognition according to one or more embodiments of the disclosure set the sound source direction through the comparison result between the audio signal energy and the first threshold, so that the accuracy of determining the sound source direction may be effectively improved. Furthermore, through displaying the sound source direction on the display device, a user may identify the source of the sound, for example, during an online meeting or while playing a game, thereby achieving a better user experience.

## Claims

1. A method for sound direction recognition, executed by a processing device (12,22), comprising:
obtaining a left channel audio signal and a right channel audio signal from an input audio signal;
determining audio signal energy of each of the left channel audio signal and the right channel audio signal, and a first absolute value of an interaural time difference between the left channel audio signal and the right channel audio signal;
setting a sound source direction according to a relationship between audio signal energy of each of the left channel audio signal and the right channel audio signal and a first threshold, and a relationship between the first absolute value and a second threshold; and
controlling a display device (11,21) to display the sound source direction;
wherein the sound source direction corresponding to a left source indicates that the audio signal energy of the left channel audio signal is greater than the first threshold and the first absolute value is smaller than the second threshold, and the sound source direction corresponding to a right source indicates that the audio signal energy of the right channel audio signal is greater than the first threshold and the first absolute value is smaller than the second threshold.

2. The method for sound direction recognition according to claim 1, further comprising:
determining an interaural level difference between the left channel audio signal and the right channel audio signal;
wherein the sound source direction corresponding to the left source further indicates that the interaural level difference is greater than a third threshold, and
wherein the sound source direction corresponding to the right source further indicates that the interaural level difference is smaller than a negative value of the third threshold.

3. The method for sound direction recognition according to claim 2,
wherein the sound source direction corresponding to a front source indicates that the first absolute value is smaller than the second threshold, and a second absolute value of the interaural level difference is smaller than the third threshold, and
the sound source direction corresponding to a rear source indicates that the interaural time difference is greater than the second threshold, and the second absolute value of the interaural level difference is smaller than the third threshold.

4. The method for sound direction recognition according to claim 2, wherein
the sound source direction corresponding to a front-left source indicates that the interaural time difference is greater than the second threshold, and the interaural level difference is greater than the third threshold;
the sound source direction corresponding to a front-right source indicates that the interaural time difference is smaller than a negative value of the second threshold, and the interaural level difference is greater than the third threshold;
the sound source direction corresponding to a rear-left source indicates that the interaural time difference is greater than the second threshold, and the interaural level difference is smaller than the negative value of the third threshold; and
the sound source direction corresponding to a rear-right source indicates that the interaural time difference is smaller than the negative value of the second threshold, and the interaural level difference is smaller than the negative value of the third threshold.

5. The method for sound direction recognition according to claim 1, wherein controlling the display device (21) to display the sound source direction comprises:
outputting the sound source direction to the display through a universal serial bus.

6. A system for sound direction recognition (1,2), comprising:
a display device (11,21), configured to display a sound source direction; and
a processing device (12,22), connected to the display device (11,21), the processing device (12,22) being configured to obtain a left channel audio signal and a right channel audio signal from an input audio signal, determine audio signal energy of each of the left channel audio signal and the right channel audio signal and a first absolute value of an interaural time difference between the left channel audio signal and the right channel audio signal, set a sound source direction according to a relationship between audio signal energy of each of the left channel audio signal and the right channel audio signal and a first threshold and a relationship between the first absolute value and a second threshold, and control a display device (11,21) to display the sound source direction,
wherein the sound source direction corresponding to a left source indicates that the audio signal energy of the left channel audio signal is greater than the first threshold and the first absolute value is smaller than the second threshold, and the sound source direction corresponding to a right source indicates that the audio signal energy of the right channel audio signal is greater than the first threshold and the first absolute value is smaller than the second threshold.

7. The system for sound direction recognition (1,2) according to claim 6, wherein the processing device (12,22) is further configured to determine an interaural level difference between the left channel audio signal and the right channel audio signal, wherein the sound source direction corresponding to the left source further indicates that the interaural level difference is greater than a third threshold, and the sound source direction corresponding to the right source further indicates that the interaural level difference is smaller than a negative value of the third threshold.

8. The system for sound direction recognition (1,2) according to claim 7, wherein the sound source direction corresponding to a front source indicates that the first absolute value is smaller than the second threshold, and a second absolute value of the interaural level difference is smaller than the third threshold, and the sound source direction corresponding to a rear source indicates that the interaural time difference is greater than the second threshold, and the second absolute value of the interaural level difference is smaller than the third threshold.

9. The system for sound direction recognition (1,2) according to claim 7, wherein the sound source direction corresponding to a front-left source indicates that the interaural time difference is greater than the second threshold, and the interaural level difference is greater than the third threshold, the sound source direction corresponding to a front-right source indicates that the interaural time difference is smaller than a negative value of the second threshold, and the interaural level difference is greater than the third threshold, the sound source direction corresponding to a rear-left source indicates that the interaural time difference is greater than the second threshold, and the interaural level difference is smaller than the negative value of the third threshold, and the sound source direction corresponding to a rear-right source indicates that the interaural time difference is smaller than the negative value of the second threshold, and the interaural level difference is smaller than the negative value of the third threshold.

10. The system for sound direction recognition (1,2) according to claim 6, wherein the processing device (22) outputs the sound source direction to the display device (21) through a universal serial bus.
